# EUROPÄISCHE PATENTSCHRIFT

(11) **EP 3 368 343 B1**
(45) Veröffentlichungstag und Bekanntmachung des Hinweises auf die Patenterteilung: **26.02.2020**
(21) Anmeldenummer: 16736498.3
(22) Anmeldetag: 11.07.2016
(51) Int. Cl.: B60C 11/01, B60C 11/11, B60C 11/12

(54) **FAHRZEUGLUFTREIFEN**
PNEUMATIC VEHICLE TIRE
PNEUMATIQUE DE VÉHICULE

(30) Priorität: 30.10.2015 DE 102015221257
(43) Veröffentlichungstag der Anmeldung: 05.09.2018
(73) Patentinhaber: Continental Reifen Deutschland GmbH, 30165 Hannover (DE)
(72) Erfinder: HEINHAUPT, Torsten, 29223 Celle (DE)
(74) Vertreter: Finger, Karsten
(86) Internationale Anmeldenummer: PCT/EP2016/066405
(87) Internationale Veröffentlichungsnummer: WO 2017/071843

(56) Entgegenhaltungen:
- EP-A1- 2 578 418
- JP-A- H06 344 723
- JP-A- 2003 211 915

## Beschreibung

Die Erfindung betrifft einen Fahrzeugluftreifen mit einem Laufstreifenprofil, welches sich in axialer Richtung des Fahrzeugluftreifens zwischen zwei Reifenschultern erstreckt, in welchen jeweils ein über den Umfang des Fahrzeugluftreifens erstreckt ausgebildetes Schulterprofilband ausgebildet ist, das in axialer Richtung zur Äquatorebene des Reifens hin durch eine über den Umfang des Fahrzeugluftreifens erstreckte Rille und auf seiner von der Äquatorebene wegweisenden Seite jeweils von einer Oberfläche der Reifenseitenwand begrenzt wird, welche die von der Äquatorebene wegweisende Flanke des Schulterprofilbandes bildet, wobei das Laufstreifenprofil in den die Reifenachse beinhaltenden Schnittebenen von einer innerhalb der Bodenaufstandsbreite die Straßenkontaktoberfläche bildenden Oberfläche begrenzt wird, die zwischen den Schulterprofilbändern eine zum Reifen hin gekrümmte Oberflächenkonturlinie bildet, wobei ein Schulterprofilband eine Profilblockreihe aus in Umfangsrichtung hintereinander angeordneten und durch Querrillen voneinander beabstandeten Profilblockelementen ist, und die Oberflächenkonturlinie des Schulterprofilbandes auch axial außerhalb der Bodenaufstandsbreite die krümmungsstetige Verlängerung der gekrümmten Oberflächenkonturlinie bildet.

Derartige Fahrzeugluftreifen sind bekannt. Verbesserter Schneegriff wird bei derartigen Reifen üblicherweise durch eine Vielzahl von Feineinschnitten innerhalb der Bodenaufstandsbreite bewirkt. Die Ausbildung der Feineinschnitte in diesem Bereich des Reifens kann jedoch auch die Steifigkeit der Profilblockelemente und somit andere Eigenschaften innerhalb der Bodenaufstandsbreite mit beeinträchtigen. Die Ausgestaltungsfreiheiten sind somit begrenzt.

Aus der EP 266 44 64 A1 ist es bekannt, außerhalb der Bodenaufstandsbreite auf einer Schulterprofilblockreihe radial außerhalb der krümmungsstetigen Verlängerung der gekrümmten Oberflächenkonturlinie zusätzliche stegförmige Aufsätze auszubilden. Dabei sind über den gesamten Umfang des Fahrzeugluftreifens hintereinander angeordnet derartige stegförmige Aufsätze an allen Profilblockelementen ausgebildet. Hierdurch kann zwar außerhalb der Bodenaufstandbreite zusätzlicher Griff im "Offroad"-Gelände oder auch im Schnee erzeugt werden. Allerdings sind derartige über den gesamten Umfang regelmäßig hintereinander verteilt angeordneten, stegförmigen, auf die Außenkontur aufgesetzen Aufsätze hochempfindlich im Einsatz auf Stein und Geröll und können somit schnell beschädigt und abgenutzt werden. Darüber hinaus erzeugen sie einen hohen Strömungswiderstand und unterliegen erhöhter Geräuschbildung und sind schwierig zu produzieren. Durch die über den gesamten Umfang eng hintereinander angeordneten, aber jeweils voneinander beabstandenden stegförmigen Absätze wird darüber hinaus bewirkt, dass über den gesamten Umfang hinweg nur eine reduzierte wirksame Oberfläche ausgebildet ist. Hierdurch werden Eisgriffeigenschaften des Reifens begrenzt.

**Aus der** EP 2 578 418 A1 **ist ein Fahrzeugluftreifen gemäß den Merkmalen des Oberbegriffs von Anspruch 1 bekannt.**

Der Erfindung liegt daher die Aufgabe zugrunde, einen Fahrzeugluftreifen zu ermöglichen, welcher einfach produzierbar mit großer wirksamer Oberfläche im Schulterbereich und somit guten Eisgriffeigenschaften bei guter Schneetraktion umgesetzt werden kann.

Die Aufgabe wird erfindungsgemäß durch die Ausbildung eines Fahrzeugluftreifens gemäß den Merkmalen des unabhängigen Anspruchs 1 gelöst.

Hierdurch wird ermöglicht, dass außerhalb der Bodenaufstandsbreite T_{A} im Bereich der Oberflächenkontur-Verlängerung in den ersten Profilblockelementen Taschen zur Aufnahme von Schnee und Matsch ausgebildet sind, wodurch sowohl auf der Straße als auch im Offroad-Bereich Schnee aufgenommen und verdichtet und unter Schnee-Schnee-Reibung sowohl von der radial äußeren Oberfläche der Straßen des Straßenbelages als auch seitlich in axialer Richtung bewirkt werden kann. Die erhöhte Schnee-Schnee-Reibung sowie die zusätzlichen Griffkanten sowohl im radial äußeren Abschnitt als auch im Seitenwand-Abschnitt der Vertiefungen bewirken eine verbesserte Schneetraktion. Durch die Ausbildung der zweiten Profilblockelemente ohne derartige Vertiefungen wird darüber hinaus über den Umfang des Reifens hinweg ausreichend Oberfläche auch im Bereich der Reifenschulter gewährleistet zur Erzielung eines guten Eisgriffs. Die Ausbildung ermöglicht dabei den Einsatz herkömmlicher Herstellungsprozesse und Reifenformen, die der üblichen Oberfächenkontur eine Pkw- bzw Vanreifens entspricht. Die Vertiefungen können in der Reifenform wie Rillen erzeugt werden. Der Reifen ist im äußeren Schulterbereich darüber hinaus sowohl in Umfangsrichtung als auch in Querrichtung ausreichend biegesteif ausgebildet, so dass er auch im Offroad-Gelände auf Stein und Geröll ohne besonderen zusätzlichen Verschleiß und Anfälligkeit eingesetzt werden kann. Zusätzliche Geräuschbildung kann weitgehend reduziert werden. Der Einsatz von ersten und zweiten Profilblockelementen ermöglicht darüber hinaus eine geräuschtechnisch besonders günstige Abfolge.

Besonders vorteilhaft ist die Ausbildung eines Fahrzeugluftreifens gemäß den Merkmalen von Anspruch 2, wobei in Umfangsrichtung des Reifens die ersten und zweiten Profilblockelemente in alternierender Abfolge hintereinander angeordnet sind. Hierdurch kann die Seteifigkeitsverteilung innerhalb der Bodenaufstandsfläche und somit das Abriebsbild weiter vergleichmäßigt werden.

Besonders vorteilhaft ist die Ausbildung eines Fahrzeugluftreifens gemäß den Merkmalen von Anspruch 3, wobei die Vertiefungen in radialer Richtung nach innen hin von einem Vertiefungsgrund begrenzt sind, welcher in den die Reifenachse beinhaltenden Schnittebenen eine vom Reifen weg gekrümmte Oberflächenkonturlinie mit einem Krümmungsradius R_{M} bildet mit 25mm≤ R_{M}, insbesondere mit R_{M} ≤50mm. Die Ausbildung ermöglicht in einfacher Weise die Bereitstellung eines großen wirksamen Aufnahmevolumens der Tasche bei einfacher Produzierbarkeit in der Formenherstellung.

Besonders vorteilhaft ist die Ausbildung eines Fahrzeugluftreifens gemäß den Merkmalen von Anspruch 4, wobei in den ersten Profilblockelementen jeweils 3 bis 6 Vertiefungen ausgebildet sind. Hierdurch kann in einfacher Weise ein besonders guter Kompromiss aus großer wirksamer Oberfläche einerseits und somit eines guten Eisgriffs und aus hoch wirksamer Ausbildung mit Taschen andererseits und somit eines guten Schneegriffs umgesetzt werden.

Besonders vorteilhaft ist die Ausbildung eines Fahrzeugluftreifens gemäß den Merkmalen von Anspruch 5, wobei in den ersten Profilblockelementen jeweils eine Vertiefung an dem in Umfangsrichtung das erste Profilblockelement begrenzenden Erstreckungsende des ersten Profilblockelementes ausgebildet ist. Durch diese Ausbildung kann die Schneegriff-Wirkung weiter optimiert werden, da zusätzlich das Volumen der an die Vertiefung angrenzenden Querrille die wirksame Tasche vergrößert.

Besonders vorteilhaft ist die Ausbildung eines Fahrzeugluftreifens gemäß den Merkmalen von Anspruch 6, wobei der in Umfangsrichtung gemessene Abstand a zwischen zwei benachbarten Vertiefungen eines ersten Profilblockelementes jeweils mit 2,5mm≤ a ≤10mm ausgebildet ist.

Die Erfindung wird im Folgenden an Hand der in den Figuren 1 bis 8 dargestellten Ausführungsbeispiele näher erläutert. Hierin zeigen
- Fig.1: einen Umfangsabschnitt des Laufstreifenprofils eines Fahrzeugluftreifens für Personenkraftwagen (PKW) in Draufsicht,
- Fig.2: das Laufstreifenprofil von Fig.1 in Seitenansicht gemäß Ansicht II-II von Fig.1,
- Fig.3: das Laufstreifenprofil von Fig.1 und Fig.2 in perspektivischer Darstellung auf die in Fig.1 rechts dargestellte Reifenschulter,
- Fig.4: eine Querschnittsdarstellung des Reifens von Fig.1 zur Darstellung der Oberflächenkontur gemäß Schnitt IV-IV von Fig.1,
- Fig.5: eine vergrößerte Schnittdarstellung gemäß Schnitt V-V von Fig.1 zur Erläuterung der Oberflächenkontur im Vertiefungsabschnitt,
- Fig.6: eine Schnittdarstellung des Reifens gemäß Schnitt VI-VI von Fig.1 zur Erläuterung der Oberflächenkontur im Stegabschnitt,
- Fig.7: eine Schnittdarstellung des Reifens gemäß Schnitt VII-VII zur Darstellung des Querrillenverlaufs und
- Fig.8: eine Schnittdarstellung des Reifens gemäß Schnitt VIII-VIII von Fig.1.

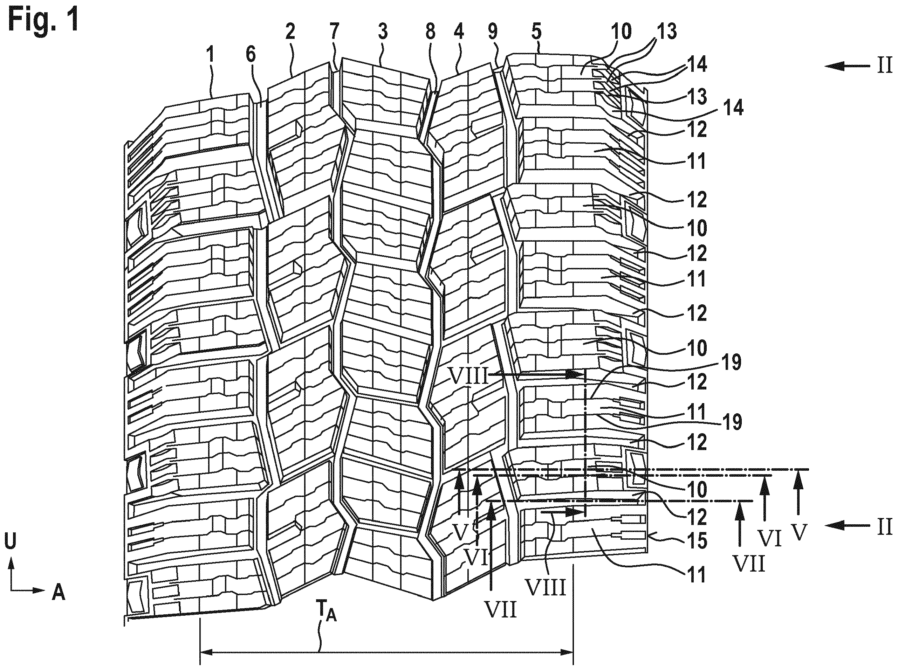

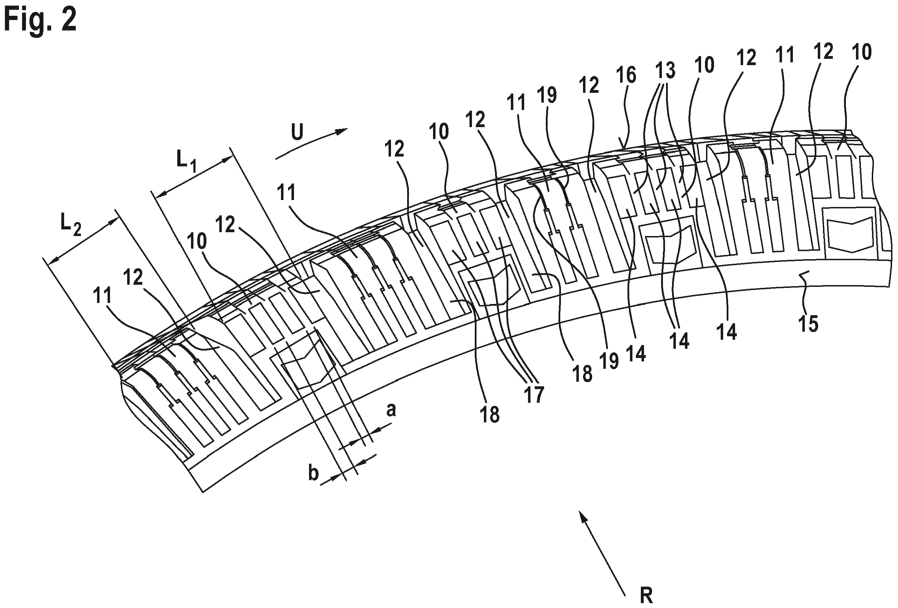

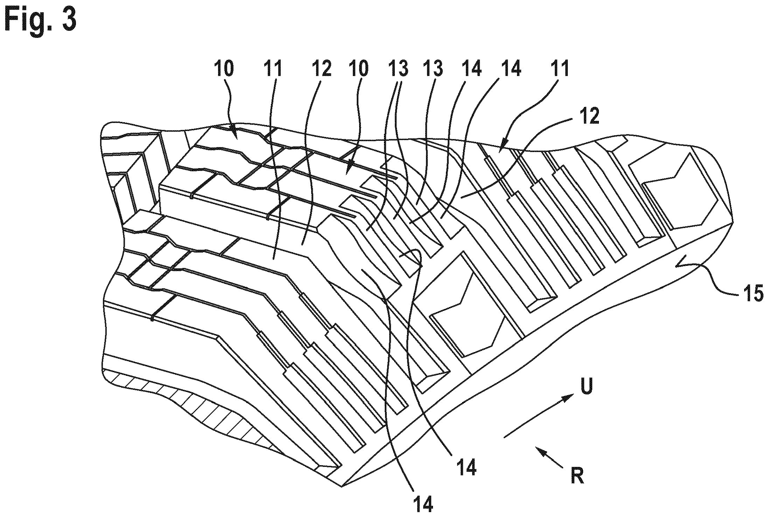

Die Figuren 1 bis 7 zeigen ein Laufstreifenprofil eines Fahrzeugluftreifens für PKW (Personenkraftwagen), Light Trucks oder Van.

Der Fahrzeugluftreifen ist in bekannter Weise mit in axialer Richtung A des Fahrzeugluftreifens nebeneinander angeordneten, über den gesamten Umfang des Fahrzeugluftreifens erstreckten Profilblockreihen 1, 2, 3, 4 und 5 ausgebildet, die jeweils durch eine über den gesamten Umfang des Fahrzeugluftreifens erstreckte Umfangsrille 6, 7, 8 bzw. 9 voneinander getrennt sind. Die Profilblockreihe 1 bildet die in Fig.1 in der linken Schulter ausgebildete Schulterprofilblockreihe. Die Profilblockreihe 5 bildet die in Fig.1 in der rechten Schulter ausgebildete Schulterprofilblockreihe. Die Profilblockreihe 1 und die Profilblockreihe 2 sind in axialer Richtung A durch die Umfangsrille 6 voneinander getrennt. Die Profilblockreihe 2 und die Profilblockreihe 3 sind in axialer Richtung A durch die Umfangsrille 7 voneinander axial getrennt. Die Profilblockreihe 3 und die Profilblockreihe 4 sind in axialer Richtung A durch die Umfangsrille 8 voneinander getrennt. Die Profilblockreihe 4 und die Profilblockreihe 5 sind in axialer Richtung A durch die Umfangsrille 9 voneinander getrennt.

Die Profilblockreihen 1, 2, 3, 4 und 5 sind jeweils in bekannter Weise durch über den Umfang des Fahrzeugluftreifens hintereinander angeordnete und durch Querrillen voneinander getrennte Profilblockelemente bekannter Art ausgebildet.

Wie in den Figuren 1 bis 8 dargestellt ist, ist die in der rechten Reifenschulter ausgebildete Profilblockreihe 5 dabei aus ersten Profilblockelementen 10 und zweiten Profilblockelementen 11 ausgebildet, welche in alternierender Abfolge in Umfangsrichtung U hintereinander angeordnet sind. Dabei sind jeweils zwei hintereinander angeordnete Profilblockelemente 10 und 11 in bekannter Weise durch eine Querrille 12 in Umfangsrichtung U des Fahrzeugluftreifens voneinander getrennt ausgebildet. Die Querrille 12 erstreckt sich dabei in axialer Richtung A durch die gesamte Profilblockreihe 5 ausgehend von der Umfangsrille 9 nach außen.

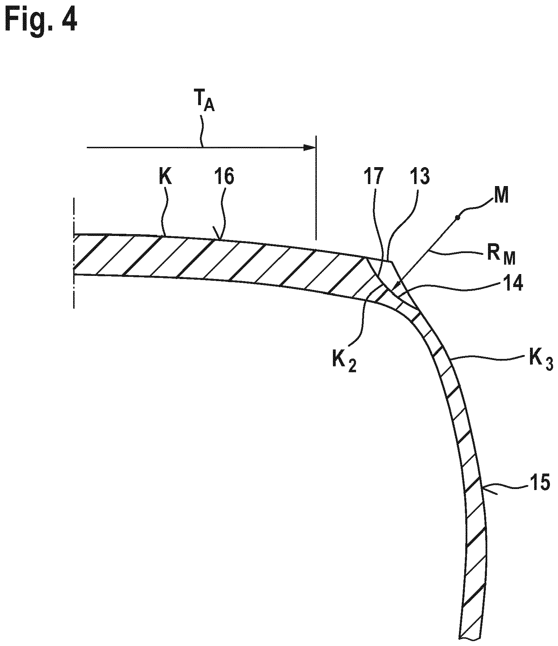

Wie in den Figuren 1 und 4 dargestellt ist, erstreckt sich die Bodenaufstandsbreite T_{A} des Fahrzeugluftreifens - gemessen im Normzustand des Fahrzeugluftreifens unter Normdruck und Normlast - ausgehend von einer axialen Position der Profilblockreihe 1 bis in eine axiale Position der Profilblockreihe 5. Die Profilblockelemente der Profilblockreihen 1,2,3,4 und 5 sind in radialer Richtung R nach außen hin jeweils durch eine radial äußere Oberfläche 10 begrenzt, welche die radial äußere Mantelfläche des Reifens bildet und im Erstreckungsbereich der Bodenaufstandsbreite T_{A} die Bodenkontaktoberfläche des Reifens bildet.

Der Fahrzeugluftreifen wird in bekannter Weise durch in axialer Richtung A jeweils in beide Richtungen durch eine Reifenseitenwand begrenzt.

Wie in den Figuren 1, 2, 3 und 4 dargestellt ist, wird die in Fig.1 rechts dargestellte Reifenseitenwand in axialer Richtung A vom Reifen weg weisend, nach außen hin durch eine Seitenwandoberfläche 15 bekannter Art begrenzt, welche in ihrer radialen Verlängerung nach außen hin jeweils die vom Reifen in axialer Richtung A wegweisende Flanke der Profilblockelemente 11 und 12 bildet. Die durch die radial äußere Oberfläche 10 gebildete radial äußere Mantelfläche bildet in den die Reifenachse aufweisenden Schnittebenen des Reifens die Konturschnittlinie K der Mantelfläche, welche innerhalb der Bodenaufstandsbreite T_{A} die Konturlinie der Bodenkontaktoberfläche bildet und welche auch in ihrer krümmungsstetigen Verlängerung über die Bodenaufstandsbreite T_{A} hinweg bis zum Schnitt, mit der Verlängerung der Schnittkonturlinie K₃ der Reifenseitenwandoberfläche 15 die radial äußere Konturschnittlinie der ersten Profilblockelemente 10 bzw. der zweiten Profilblockelemente 11 der Profilblockreihe 5 bildet.

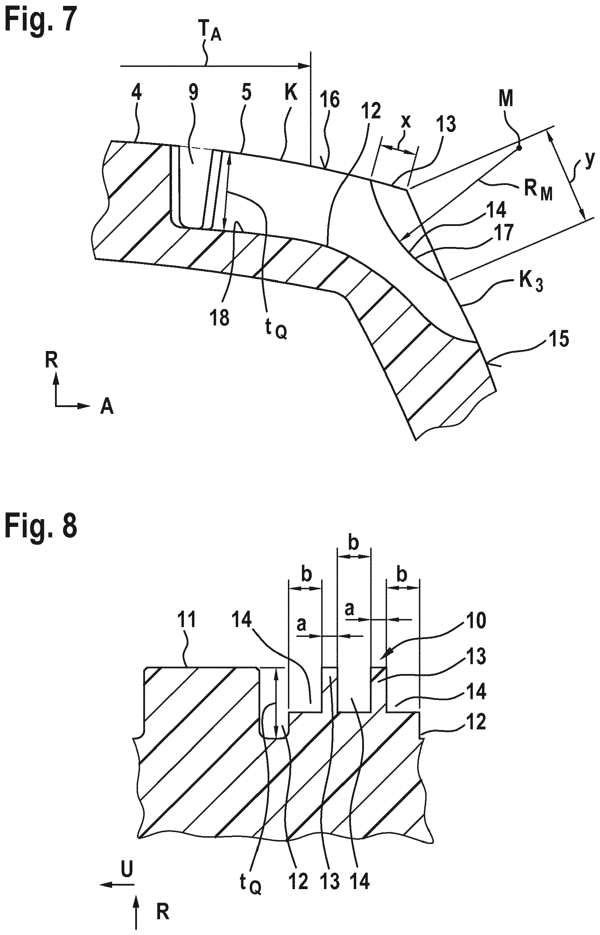

Wie in Figur 7 dargestellt ist, erstrecken sich die Querrillen 12 in axialer Richtung A des Fahrzeugluftreifens ausgehend von der Umfangsrille 9 durch die gesamte Profilblockreihe 1 bis zur verlängerten Konturlinie K₃ der Reifenseitenwandkontur 15. Die Querrillen 12 sind in bekannter Weise nach radial innen hin durch einen Rillengrund 18 begrenzt und mit einer Tiefe t_{Q} ausgebildet, die innerhalb der Bodenaufstandsbreite T_{A} mit 5mm≤ t_{Q} ≤ 16 mm ausgebildet ist.

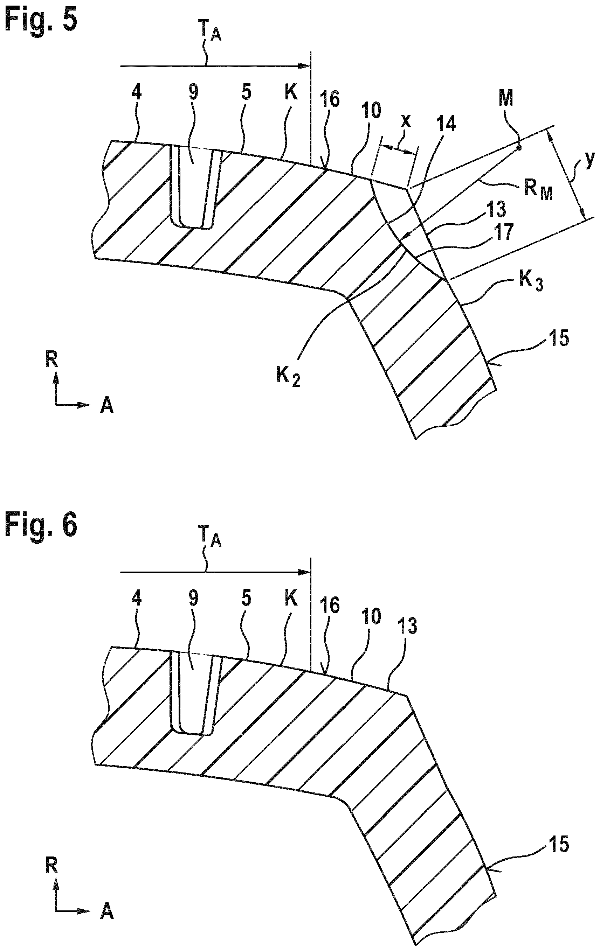

Wie in den Figuren 1,2,3,4,5,7 und 8 dargestellt ist, sind die ersten Profilblockelemente 10 außerhalb der Bodenaufstandsbreite T_{A} über die Umfangserstreckung des jeweiligen Profilblocklelementes 10 hinweg mit mehreren jeweils in einem in der radial äußeren Oberfläche 10 gemessenen Abstand a voneinander hintereinander angeordneten muldenförmigen Vertiefungen 14 ausgebildet, wobei jeweils eine muldenförmige Vertiefung 14 unmittelbar an die das erste Profilblockelement 10 in Umfangsrichtung U begrenzende Querrille 12 angrenzt. Die muldenförmigen Vertiefungen 14 sind in Umfangsrichtung U gesehen mit einer in der die Mantelfläche bildenden radial äußeren Oberfläche 16 gemessenen Erstreckungsbreite b ausgebildet und erstrecken sich in axialer Richtung A ausgehend von einer Position in der radial äußeren Oberfläche 16 - mit einer in der der Mantelfläche gemessenen Erstreckungslänge x - längs der Konturlinie K bis zur Schnittposition der Konturlinie K mit der Verlängerung der Konturlinie K₃ der Reifenseitenwandkontur der Seitenwand und im Anschluss daran - mit einer in der Oberfläche 15 gemessenen Erstreckungslänge y - längs der Seitenwanderstreckung in radialer Richtung R nach innen hin bis in eine Position radial außerhalb des Rillengrundes 18 der das Profilblockelement 10 begrenzenden Querrille 12 und enden dort. Die muldenförmige Vertiefung 14 ist dabei längs ihrer axialen Erstreckung bis zur Reifenseitenwand jeweils in radialer Richtung R nach innen durch einen Vertiefungsgrund 17 begrenzt. Der Vertiefungsgrund 17 ist - wie in den Figuren 5 und 7 dargestellt - in den die Reifenachse beinhaltenden Schnittebenen jeweils mit einer um einen radial und axial außerhalb des Reifens angeordneten Krümmungsmittelpunkt M gekrümmten Krümmungsradius R_{M} gekrümmten Konturlinie K₂ ausgebildet. Zwischen zwei in Umfangsrichtung U hintereinander angeordneten Vertiefungen 14 eines Profilblockelementes 10 ist im Profilblockelement 10 jeweils ein Umfangsabschnitt U des Profilblockelementes 10 ausgebildet, der sich als Steg 13 in axialer Richtung A nach außen erstreckt und in den die Reifenachse beinhaltenden Schnittebenen mit seiner radial äußeren Oberfläche 16 der Konturlinie K folgt.

Die zweiten Profilblockelemente 11 sind ohne derartige Vertiefungen 14 ausgebildet.

Die Breiten b sind dabei mit 4 mm ≤ b ausgebildet. Die beiden an Querrillen 12 angrenzenden Vertiefungen 14 sind dabei mit gleicher oder größerer Breite b ausgebildet als die zwischen zwei Stegen 13 ausgebildeten Vertiefungen 14.

Die Abstände a eines Profilblockelementes 10 sind mindestens 2,5mm gewählt. Beispielsweise sind die Abstände a eines Profilblockelementes 10 sind 0,6 mal so groß wie die Breite b der kleinsten muldenförmigen Vertiefung 14 eines Profilblockelementes 10 ausgebildet.

Beispielsweise ist die kleinste Breite b mit b=5mm, die Breite b der an die Querrillen angrenzenden Vertiefungen 14 mit b=6,5mm und die Abstände a mit a=3mm ausgebildet.

Die gewählten Erstreckungslängen L₁ der ersten Profilblockelemente 10 und die in Umfangsrichtung U Erstreckungslänge L2 der zweiten Profilblockelemente 11 hängen von der Reifengröße und der gewählten Pitchzahl ab.

Im dargestellten Ausführungsbeispiel ist die größte Pitchlänge mit 31mm und die kleinste Pitchlänge mit 24mm ausgebildet. Die Erstreckungslängen L₁ der ersten Profilblockelemente 10 in Umfangsrichtung U entsprechen jeweils Pitchlänge und sind daher mit 24 mm ≤ L₁ ≤ 31mm ausgebildet. Die in Umfangsrichtung U gemessene Erstreckungslänge L₂ der zweiten Profilblockelemente 11 entsprechen ebenfalls der Pitchlänge und sind somit mit 24mm ≤ L₂ ≤ 31mm ausgebildet.

Im dargestellten Ausführungsbeispiel ist ein Profil mit lediglich zwei Pitchlängen dargestellt, von denen die eine 31 mm und die andere 24mm ist.

Die Erstreckungslänge x ist mit 4mm≤x ausgebildet, die Erstreckungslänge y ist mit x ≤ y ≤ 2,5x ausgebildet ist. Beispielsweise ist x=8mm und y=2^{∗}x.

Der Radius R_{M} ist mit 25mm ≤ R_{M} ≤50mm ausgebildet. Beispielsweise ist R_{M} = 30 mm gewählt.

Innerhalb eines ersten Profilblockelementes sind dabei zwei bis fünf Stege 13 und drei bis sechs Vertiefungen 14 ausgebildet.

Wie in den Figuren 1 bis 7 dargestellt ist, sind zusätzlich in Profilblockelementen - beispielsweise in den Profilblockelementen 11 und 10 der Profilblockreihen 5 - Feineinschnitte 19 bekannter Art ausgebildet.

Wie in Figur 1 dargestellt ist, ist auch die Profilblockreihe 1 analog zur Profilblockreihe 5 aus ersten 10 und zweiten 11 Profilblockelementen ausgebildet.

### Bezugszeichenliste

(Teil der Beschreibung)
- 1: Profilblockreihe
- 2: Umfangsrippe
- 3: Umfangsrippe
- 4: Umfangsrippe
- 5: Profilblockreihe
- 6: Umfangsrille
- 7: Umfangsrille
- 8: Umfangsrille
- 9: Umfangsrille
- 10: Erstes Profilblockelement
- 11: Zweites Profilblockelement
- 12: Querrille
- 13: Steg
- 14: Vertiefung
- 15: Seitenwandoberfläche
- 16: Radial äußere Oberfläche
- 17: Vertiefungsgrund
- 18: Rillengrund
- 19: Feineinschnitt

## Patentansprüche

1. Fahrzeugluftreifen mit einem Laufstreifenprofil, welches sich in axialer Richtung (A) des Fahrzeugluftreifens zwischen zwei Reifenschultern erstreckt, in welchen jeweils ein über den Umfang des Fahrzeugluftreifens erstreckt ausgebildetes Schulterprofilband ausgebildet ist, das in axialer Richtung (A) zur Äquatorebene des Reifens hin durch eine über den Umfang des Fahrzeugluftreifens erstreckte Rille (9) und auf seiner von der Äquatorebene wegweisenden Seite jeweils von einer Oberfläche (15) der Reifenseitenwand begrenzt wird, welche die von der Äquatorebene wegweisende Flanke des Schulterprofilbandes bildet, wobei das Laufstreifenprofil in den die Reifenachse beinhaltenden Schnittebenen von einer innerhalb der Bodenaufstandsbreite (T_{A}) die Straßenkontaktoberfläche bildenden Oberfläche (16) begrenzt wird, die zwischen den Schulterprofilbändern eine zum Reifen hin gekrümmte Oberflächenkonturlinie (K) bildet, wobei ein Schulterprofilband eine Profilblockreihe (5) aus in Umfangsrichtung (U) hintereinander angeordneten und durch Querrillen (12) voneinander beabstandeten Profilblockelementen ist, und die Oberflächenkonturlinie (K) des Schulterprofilbandes auch axial außerhalb der Bodenaufstandsbreite (T_{A}) die krümmungsstetige Verlängerung der gekrümmten Oberflächenkonturlinie (K) bildet, wobei die Profilblockreihe (5) aus ersten (10) und aus zweiten (11) Profilblockelementen ausgebildet ist, wobei in den ersten Profilblockelementen (10) außerhalb der Bodenaufstandsbreite (T_{A}) jeweils mehrere in Umfangsrichtung (U) hintereinander angeordnete und von einander beabstandete, axial erstreckte Vertiefungen (14) mit einer in Umfangsrichtung (U) Breite b ausgebildet sind, die sich bis zu der die Oberfläche (15) der Seitenwand bildenden Flanke der Profilbandes erstrecken,
**dadurch gekennzeichnet,**
**dass** die Breite b mit 4mm ≤b≤ 10mm ausgebildet ist und in den zweiten Profilblockelementen (11) keine derartigen Vertiefungen (14) ausgebildet sind.

2. Fahrzeugluftreifen gemäß den Merkmalen von Anspruch 1, wobei in Umfangsrichtung (U) des Reifens die ersten (10) und zweiten (11) Profilblockelemente in alternierender Abfolge hintereinander angeordnet sind.

3. Fahrzeugluftreifen gemäß den Merkmalen von Anspruch 1 oder 2, wobei die Vertiefungen (14) in radialer Richtung (R) nach innen hin von einem Vertiefungsgrund (17) begrenzt sind, welcher in den die Reifenachse beinhaltenden Schnittebenen eine vom Reifen weg gekrümmte Oberflächenkonturlinie (K₂) mit einem Krümmungsradius R_{M} bildet mit 25mm≤ R_{M}, insbesondere mit R_{M} ≤50mm.

4. Fahrzeugluftreifen gemäß den Merkmalen von einem oder mehreren der vorangegangenen Ansprüche, wobei in den ersten Profilblockelementen (10) jeweils 3 bis 6 Vertiefungen (14) ausgebildet sind.

5. Fahrzeugluftreifen gemäß den Merkmalen von einem oder mehreren der vorangegangenen Ansprüche, wobei in den ersten Profilblockelementen (10) jeweils eine Vertiefung (14) an dem in Umfangsrichtung (U) das erste Profilblockelement (10) begrenzenden Erstreckungsende des ersten Profilblockelementes (10) ausgebildet ist.

6. Fahrzeugluftreifen gemäß den Merkmalen von einem oder mehreren der vorangegangenen Ansprüche, wobei der in Umfangsrichtung (U) gemessene Abstand a zwischen zwei benachbarten Vertiefungen (14) eines ersten Profilblockelementes (10) jeweils mit 2,5mm≤ a ≤10mm ausgebildet ist.

## Claims

1. Pneumatic vehicle tyre having a tread strip profile which extends in the axial direction (A) of the pneumatic vehicle tyre between two tyre shoulders, in which in each case one shoulder profile strip is configured which is configured so as to extend over the circumference of the pneumatic vehicle tyre and is delimited in the axial direction (A) towards the equator plane of the tyre by way of a groove (9) which extends over the circumference of the pneumatic vehicle tyre and, on its side which points away from the equator plane, in each case by a surface (15) of the tyre sidewall which forms that flank of the shoulder profile strip which points away from the equator plane, the tread strip profile being delimited, in the sectional planes which include the tyre axis, by a surface (16) which forms the road contact surface within the ground contact width (T_{A}) and, between the shoulder profile strips, forms a surface contour line (K) which is curved towards the tyre, a shoulder profile strip being a tread bar row (5) consisting of tread bar elements which are arranged behind one another in the circumferential direction (U) and are spaced apart from one another by way of transverse grooves (12), and the surface contour line (K) of the shoulder profile strip also forming the constant-curvature extension of the curved surface contour line (K) axially outside the ground contact width (T_{A}), the tread bar row (5) being configured from first (10) and from second (11) tread bar elements, in each case a plurality of axially extending depressions (14) which are arranged behind one another in the circumferential direction (U) and are spaced apart from one another being configured with a width b in the circumferential direction (U) in the first tread bar elements (10) outside the ground contact width (T_{A}), which depressions (14) extend as far as that flank of the profile strip which forms the surface (15) of the sidewall, **characterized in that** the width b is configured such that 4 mm ≤ b ≤ 10mm, and no depressions (14) of this type are configured in the second tread bar elements (11).

2. Pneumatic vehicle tyre according to the features of Claim 1, the first (10) and second (11) tread bar elements being arranged behind one another in an alternating sequence in the circumferential direction (U) of the tyre.

3. Pneumatic vehicle tyre according to the features of Claim 1 or 2, the depressions (14) being delimited in the radial direction (R) towards the inside by a depression bottom (17) which, in the sectional planes which include the tyre axis, forms a surface contour line (K₂) which is curved away from the tyre with a curvature radius R_{M} where 25 mm ≤ R_{M}, in particular where R_{M} ≤ 50 mm.

4. Pneumatic vehicle tyre according to the features of one or more of the preceding claims, in each case from 3 to 6 depressions (14) being configured in the first tread bar elements (10).

5. Pneumatic vehicle tyre according to the features of one or more of the preceding claims, in each case one depression (14) being configured in the first tread bar elements (10) at that extent end of the first tread bar element (10) which delimits the first tread bar element (10) in the circumferential direction (U).

6. Pneumatic vehicle tyre according to the features of one or more of the preceding claims, the spacing a which is measured in the circumferential direction (U) between two adjacent depressions (14) of a first tread bar element (10) being configured in each case such that 2.5 mm ≤ a ≤ 10 mm.

## Revendications

1. Pneumatique de véhicule comprenant un profil de bande de roulement qui s'étend dans la direction axiale (A) du pneumatique de véhicule entre deux épaulements de pneumatique dans chacun desquels une bande de profil d'épaulement est formée qui s'étend sur la circonférence du pneumatique de véhicule et qui est limitée dans la direction axiale (A) par rapport au plan équatorial du pneumatique par une rainure (9) s'étendant sur la circonférence du pneumatique de véhicule et, sur son côté opposé au plan équatorial, par une surface (15) de la paroi latérale de pneumatique qui forme le flanc, à l'opposé du plan équatorial, de la bande de profil d'épaulement, le profil de bande de roulement dans les plans de coupe contenant l'axe de pneumatique étant délimité par une surface (16) qui forme la surface de contact avec la route à l'intérieur de la largeur d'appui au sol (T_{A}) et qui forme une ligne de contour de surface (K), incurvée vers le pneumatique, entre les bandes de profil d'épaulement, une bande de profil d'épaulement étant une rangée de blocs profilés (5) formés d'éléments de bloc profilés disposés les uns derrière les autres dans la direction circonférentielle (U) et espacés les uns des autres par des rainures transversales (12), et la ligne de contour de surface (K) de la bande de profil d'épaulement formant également axialement à l'extérieur de la largeur d'appui au sol (T_{A}) l'extension à courbure constante de la ligne de contour de surface incurvée (K),
la rangée de blocs profilés (5) étant formée de premiers (10) et deuxièmes (11) éléments de bloc profilé, une pluralité de creux (14) s'étendant axialement, espacés les uns des autres dans la direction circonférentielle (U), disposés les uns derrière les autres et ayant une largeur b dans la direction circonférentielle (U) étant formés dans les premiers éléments de bloc profilé (10) à l'extérieur de la largeur d'appui au sol (T_{A}), lesquels creux s'étendent jusqu'au flanc de la bande de profil formant la surface (15) de la paroi latérale,
**caractérisé en ce que**
la largeur b est telle que 4 mm ≤ b ≤ 10 mm et aucun creux (14) n'est formé dans les deuxièmes éléments de bloc profilé (11).

2. Pneumatique de véhicules selon les caractéristiques de la revendication 1, les premiers (10) et deuxièmes (11) éléments de bloc profilé sont disposés les uns derrière les autres suivant une séquence alternée dans la direction circonférentielle (U) du pneumatique.

3. Pneumatique de véhicule selon les caractéristiques de la revendication 1 ou 2, les évidements (14) étant délimités dans une direction radiale (R) vers l'intérieur par un fond de creux (17) qui forme une ligne de contour de surface incurvée (K₂) s'écartant du pneumatique et de rayon de courbure R_{M} tel que 25 mm ≤ R_{M}, en particulier R_{M} ≤ 50 mm, dans les plans de coupe contenant l'axe du pneumatique.

4. Pneumatique de véhicule selon les caractéristiques d'au moins une revendication précédente, 3 à 6 creux (14) étant formés dans chacun des premiers éléments de bloc de profil (10).

5. Pneumatique de véhicule selon les caractéristiques d'au moins une des revendications précédentes, un creux (14) étant formé dans chacun des premiers éléments de bloc de profil (10) à l'extrémité d'extension du premier élément de bloc de profil (10) délimitant le premier élément de bloc de profil (10) dans la direction circonférentielle (U).

6. Pneumatique de véhicule selon les caractéristiques d'au moins une des revendications précédentes, la distance a, mesurée dans la direction circonférentielle (U), entre deux creux adjacents (14) d'un premier élément de bloc de profil (10) étant à chaque telle que 2,5 mm ≤ a ≤ 10 mm.
